# EUROPÄISCHE PATENTANMELDUNG

(11) **EP 3 550 386 A1**
(43) Veröffentlichungstag der Anmeldung: **09.10.2019**
(21) Anmeldenummer: 18165879.0
(22) Anmeldetag: 05.04.2018
(51) Int. Cl.: G05B 19/042

(54) **VERFAHREN ZUM BEREITSTELLEN EINER KOMMUNIKATION IN EINEM AUTOMATISIERUNGSNETZWERK, SPEICHER PROGRAMMIERBARE STEUERUNG UND FELDGERÄT**

(71) Anmelder: Siemens Aktiengesellschaft, 80333 München (DE)
(72) Erfinder: Höme, Stephan, 91126 Schwabach (DE); Kerschbaum, Sven, 90768 Fürth (DE)

(57) **Zusammenfassung**

Die Erfindung betrifft ein Verfahren zum Bereitstellen einer Kommunikation in einem, insbesondere gemäß dem PROFINET Standard betriebenen, Automatisierungsnetzwerk mit zumindest einer Speicher Programmierbaren Steuerung und zumindest einem ersten Feldgerät, bei dem durch die Speicher Programmierbare Steuerung auf Grundlage zumindest einer Netzwerkeigenschaft, insbesondere einer ersten Zykluszeit der Speicher Programmierbaren Steuerung, eine zweiten Zykluszeit des Feldgerätes zumindest temporär bestimmt und dem Feldgerät als zweite Zykluszeit vorgegeben wird. Ferner betrifft die Erfindung eine Speicherprogrammierbare Steuerung und ein Feldgerät jeweils mit Mitteln zur Durchführung des Verfahrens.

## Beschreibung

Die Erfindung betrifft ein Verfahren zum Bereitstellen einer Kommunikation in einem Automatisierungsnetzwerk gemäß dem Oberbegriff des Anspruchs 1, eine Speicher Programmierbare Steuerung gemäß dem Gattungsbegriff des Anspruchs 10 sowie ein Feldgerät gemäß dem Gattungsbegriff des Anspruchs 11.

Der Zusammenschluss als Netzwerk, die beispielsweise zumindest teilweise gemäß dem offenen Standard PROFINET ausgebildet sind, im Rahmen der Automatisierungstechnik, ist bekannt.

Das PROFINET (PN) Konzept erlaubt einen modularen Aufbau derart, dass Anwender die Funktionalität selbst wählen können, wobei sich diese im Wesentlichen durch die Art des Austausch von Daten unterscheidet, um damit den jeweiligen Anforderungen an Geschwindigkeit gerecht zu werden.

Für die Anbindung dezentraler Peripherie bzw. (Feld-)Geräten, an eine, insbesondere Speicher Programmierbare Steuerung (SPS), Steuerung ist im Rahmen von PROFINET, IO (Input-Output auch Profinet I/O) geschaffen worden.

Beim Profinet IO erfolgt ein zyklischer Datenaustausch nach dem RT (Real Time) Protokoll, die eine Kommunikation in Echtzeit ermöglichen soll.

Hierzu ist vorgesehen, dass Benutzer beim Engineering eines IO-Systems die Zykluszeiten für einzelne Geräte fest vorgeben.

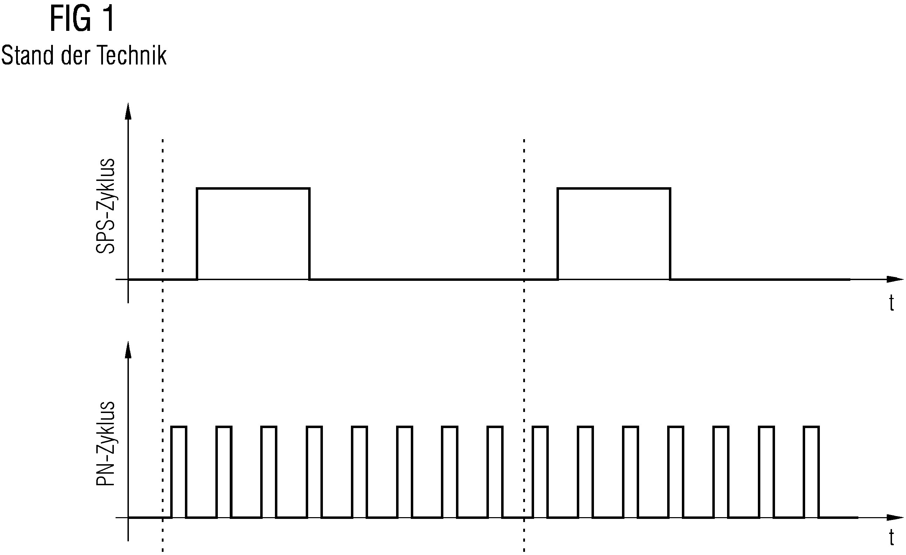

Dabei erfolgt diese Einstellung in der Regel nach festem Schema und nicht anwendungsbezogen. Häufig werden seitens der Benutzer möglichst kleine Zykluszeiten eingestellt, obwohl der Verarbeitungszyklus des SPS-Programms deutlich langsamer, wie in der Figur 1 zu erkennen ist, und zudem auch abhängig vom aktuellen Zustand der Anlage ist.

Daraus ergibt sich eine höhere Auslastung des Netzwerkkommunikationssystems als notwendig, da immer nur die letzten übertragenen Werte verarbeitet werden.

Die der Erfindung zugrundeliegende Aufgabe ist es daher eine Lösung anzugeben, die die Nachteile des Standes der Technik überwindet.

Diese Aufgabe wird durch das Verfahren zum Bereitstellen einer Kommunikation in einem, insbesondere gemäß dem PROFINET Standard betriebenen, ausgehend vom Oberbegriff des Anspruchs 1 durch dessen kennzeichnende Merkmale, durch die Speicher Programmierbare Steuerung gemäß Gattungsbegriff des Anspruchs 10 durch dessen kennzeichnenden Merkmale sowie dem Feldgerät gemäß dem Gattungsbegriff des Anspruchs 11 durch dessen kennzeichnenden Merkmale gelöst.

Bei dem erfindungsgemäßen Verfahren zum Bereitstellen einer Kommunikation in einem, insbesondere gemäß dem PROFINET Standard betriebenen, Automatisierungsnetzwerk mit zumindest einer Speicher Programmierbaren Steuerung und zumindest einem ersten Feldgerät, wird durch die Speicher Programmierbare Steuerung auf Grundlage zumindest einer Netzwerkeigenschaft, insbesondere einer ersten Zykluszeit der Speicher Programmierbaren Steuerung, eine zweiten Zykluszeit des Feldgerätes zumindest temporär bestimmt und dem Feldgerät als zweite Zykluszeit vorgegeben.

Hierdurch wird eine adaptive Anpassung der Zykluszeiten von Feldgeräten an die gegebenen Netzwerkeigenschaften, insbesondere die Anwendungszyklen, d.h. der ersten Zykluszeiten, der Speicher Programmierbaren Steuerung, ermöglicht.

Bei der erfindungsgemäßen Speicher Programmierbaren Steuerung sowie dem erfindungsgemäßen Feldgerät sind Mittel zur Durchführung des Verfahrens und/oder seiner Weiterbildungen vorgesehen.

Durch diese beiden erfindungsgemäßen Einrichtungen wird jeweils die Implementierung des erfindungsgemäßen Verfahrens erreicht und damit die Verwirklichung der Vorteile der Erfindung und dessen Weiterbildungen ermöglicht.

Weitere vorteilhafte Ausgestaltungen der Erfindung sind in den Unteransprüchen gegeben.

Bei einer bevorzugten Weiterbildung des erfindungsgemäßen Verfahrens überwacht die Speicher Programmierbare Steuerung die Netzwerkeigenschaften, insbesondere den Verlauf der ersten Zykluszeit, während des Betriebes. Hierdurch wird erzielt, dass das Netzwerk, bzw. die Kommunikation im Netzwerk, fähig ist sich an die sich, insbesondere ändernden, Gegebenheiten im Betrieb anpassen kann.

Unterstützt wird dieser Vorteil, wenn das erfindungsgemäße Verfahren derart weitergebildet wird, dass die Speicher Programmierbare Steuerung die zweite Zykluszeit auf Grundlage einer Historie der Überwachung der ersten Zykluszeit bestimmt. Hierdurch wird nämlich eine Grundlage geschaffen, eine optimale Zykluszeit zu bestimmen, wobei dies durch zeitlich vor einem aktuellen Betriebsbeginn des Automatisierungsnetzwerks liegenden Betrieben des erfasste Historien berücksichtigen kann und somit bereits bei Betriebsbeginn eine optimale zweite Zykluszeit gefunden und vorgegeben aber auch während des Betriebs aktualisiert werden kann.

Bevorzugt wird hierzu das erfindungsgemäße Verfahren derart weitergebildet, dass die Speicher Programmierbare Steuerung statistische Größen, wie gleitender Mittelwert, Maxima und/oder Minima, auf Grundlage der Überwachung bildet. Hierbei handelt es sich um Größen, die sich sehr gut für Bestimmung durch Algorithmen, insbesondere bei denen wie gemäß einer Weiterbildung des Verfahrens bei der die Speicher Programmierbare Steuerung die zweite Zykluszeit auf Grundlage einer Prädiktion des zukünftigen Verlaufs der ersten Zykluszeit bestimmt, geeignet sind. Prädiktionsalgorithmen, insbesondere durch maschinelles Lernen unterstützte, sind gut erforscht und akkurat.

Alternativ oder ergänzend hierzu ist es von Vorteil, wenn das erfindungsgemäße Verfahren derart weitergebildet wird, dass die Speicher Programmierbare Steuerung als eine, insbesondere weitere, Netzwerkeigenschaft, die Änderungsrate von Prozesswerten des ersten Feldgerätes überwacht und die Ergebnisse der Überwachung zur Vorgabe der zweiten Zykluszeit heranzieht. Hierdurch kann die Bestimmung der zweiten Zykluszeiten weiter auf die Kommunikation mit dem Feldgerät optimiert und die Kommunikation im Netzwerk noch weiter verbessert werden.

Zieht die Speicher Programmierbare Steuerung als eine, insbesondere weitere, Netzwerkeigenschaft, den Zustand des Netzwerks, insbesondere Diagnoseinformationen und/oder Anlagenzustände, wie Betrieb, Stillstand, Wartung, etc., überwacht und die Ergebnisse der Überwachung zur Vorgabe der zweiten Zykluszeit alternativ oder ergänzend heran, werden Einflussgrößen des Netzwerks zur Bestimmung hinzugezogen, so dass eine weitere Optimierungsmöglichkeit gegeben ist.

Wird das erfindungsgemäße Verfahren derart weitergebildet, dass eine Optimierung der Bestimmung der zweiten Zykluszeit auf Grundlage von, insbesondere während des Betriebs, durchgeführtem maschinellen Lernen erfolgt, so erhält man eine sehr mächtige, sich selbst optimierende Implementierung der Bestimmung der zweiten Zykluszeiten.

Bevorzugt wird dabei das Verfahren derart weitergebildet, dass die Bestimmung und/oder die Vorgabe während des Betriebes, insbesondere nach regelmäßigen Zeitabständen und/oder ereignisgesteuert, wiederholt wird. Dadurch wird die erfindungsgemäße Verfahrensweise und ihr Vorteil der Adaptionsfähigkeit der Zykluszeiten besonders vorteilhaft eingesetzt.

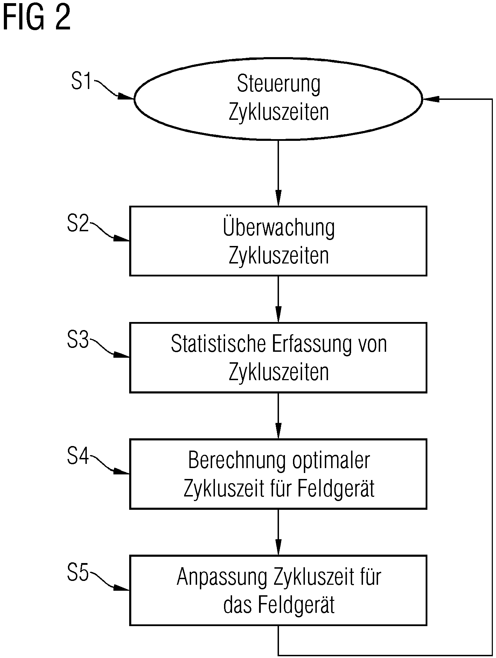

Weitere Einzelheiten und Vorteile der Erfindung sollen ausgehend von dem in der Figur 1 dargestellten Stand der Technik, anhand eines in der Figur 2 gezeigten Ausführungsbeispiels näher erläutert werden. Dabei zeigt die
- Figur 1: eine Gegenüberstellung von gemäß dem Stand der Technik typischer Weise eingestellter PN-Zykluszeit zur Zykluszeit der SPS des Automatisierungsnetzwerks,
- Figur 2: eine schematische Darstellung des Ablaufplans eines Ausführungsbeispiels des erfindungsgemäßen Verfahrens.

Die Figur 1 zeigt wie sich im gemäß Stand der Technik bekannten IO Systemen das Verhältnis von SPS-Zykluszeit und PN-Zykluszeit darstellt. Zu erkennen ist, dass die PN-Zykluszeiten deutlich kürzer eingestellt sind, als die SPS-Zykluszeiten. Dies führt zu einer unnötigen Mehrauslastung des Automatisierungsnetzwerks bzw. des dem zugrundeliegenden Kommunikationssystem.

Diesen Nachteil überwindet erfindungsgemäß das in der Figur 2 gezeigte Ausführungsbeispiel des erfindungsgemäßen Beispiels. Dargestellt ist ein Ablaufdiagram des Ausführungsbeispiels, welches das Ausführungsbeispiel schematisch darlegt.

Zu erkennen ist ein durch einen ersten Schritt S1 gegebener Ausgangszustand des Systems, in dem die Zyklussteuerung gemäß dem Ausführungsbeispiel der Erfindung im System durch die SPS durchgeführt wird und somit eine automatische, adaptive Anpassung der Aktualisierungszeiten zwischen SPS und Feldgeräten an die SPS-Anwendungszyklen durch die Steuerung ermöglicht. Dies kann beispielsweise durch eine als Hintergrundprogramm mitlaufende, insbesondere Interrupt gesteuerte, Prozedur oder hierzu alternativen Implementierungen im System laufen.

In einem zweiten Schritt S2 wird der Anwendungszyklus überwacht, um aus dem Verlauf eine optimale Zykluszeit zu berechnen.

Die Ergebnisse der Überwachung, also die Zykluszeiten, gehen in einem dritten Schritt S3 in eine statistische Erfassung ein. Dabei kann beispielsweise eine Berechnung unter Berücksichtigung von gleitendem Mittelwert, Minima und/oder Maxima erfolgen.

Hierauf folgt darauf basierend in einem vierten Schritt S4 eine Berechnung der optimalen Zykluszeit für ein Feldgerät bzw. je Feldgerät.

Die optimale Zykluszeit kann beispielsweise als eine sich aus der statischen Erfassung, nach üblichen statistischen Methoden, ableitbaren Prädiktion der zu erwartenden Zykluszeit ergeben.

Mit dieser ermittelten Zykluszeit kann dann in einem fünften Schritt S5 eine Anpassung der Zykluszeit an die Änderungsrate von Prozesswerten des jeweiligen Feldgerätes erfolgen.

Nach diesem fünften Schritt S5 verbleibt die Implementierung in dem durch den ersten Schritt S1 gekennzeichneten Zustand und beginnt dort, beispielsweise nach einer festgelegten Zeit oder Ereignisgesteuert mit einem erneuten Durchlauf.

Die Erfindung ist nicht auf dieses Ausführungsbeispiel beschränkt, vielmehr kann dieses Ausführungsbeispiel gemäß den durch die Ansprüche abgedeckten Variationen und Weiterbildungen auch alternativ oder ergänzend zu den beschriebenen Schritten S1...S5 auch weitere Einflussfaktoren für die Wahl der Zykluszeiten berücksichtigt werden, wie zum Beispiel:
o Zustand des Netzwerkes (Diagnoseinformationen)
o Anlagenzustand (Betrieb, Stillstand, Wartung, ...)
   ▪ Z.B. höhere Zykluszeiten in Wartung, um mehr Non-Realtime-Traffic (z.B. für Firmware-Updates) zu ermöglichen.

Ferner sieht die Erfindung auch vor, dass ein Mischbetrieb möglich ist. D.h. dass die erfindungsgemäße Adaption der Zykluszeiten nur temporär und/oder nur für einen Teil der (Feld-)Geräte durchgeführt wird, so dass sich der Einsatz der Erfindung beispielsweise so darstellt:
o Ein Teil der Geräte wird fest projektiert (aufgrund von äußeren Anforderungen oder mangelnder Unterstützung der Adaption durch die Geräte)
o Andere Geräte werden adaptiv projektiert und die SPS übernimmt die Wahl der Zykluszeit

Der Kern der Erfindung, also eine adaptive Anpassung der Zykluszeit durch die Steuerung, ist dabei auch in solchen Systemen gegeben, so dass sie gemäß Ansprüchen unter die Erfindung fallen.

Vorteile dieser, zumindest teilweisen adaptiven Anpassung der Zykluszeiten sind:
o Handhabung wird für den Anwender vereinfacht, da die SPS eine passende Auswahl der Zykluszeit übernimmt
o Minimierung der Netzwerk-Auslastung zur Ermöglichung von weiteren Diensten ohne Eingriff durch den Anwender

Es überwindet damit die Nachteile des Standes der Technik, bei dem die Aktualisierungszeiten in der Regel ausschließlich fest gewählt werden.

Auch ermöglicht die Erfindung es zu vermeiden, dass das Netzwerk vom RT-Verkehr überlastet ist und erst zu diesem Zeitpunkt höhere Aktualisierungszeiten gewählt werden. Dadurch werden auch mehr oder minder kurzzeitige Anlagenstopps vermieden, die sich selbst dann ergeben würden, wenn zur Laufzeit der SPS-Anwendungszyklus beobachtet werden würde und basierend darauf die Zykluszeit der PN-Kommunikation zu den Geräten angepasst werden. Die Erfindung hat auch den Vorteil, dass es sich in kurzer Zeit adaptiert im Vergleich zu der genannten Beobachtung des SPS-Anwendungszyklus, da diese über langen Zeitraum erfolgen muss, weil die Verarbeitungsdauer vom Zustand der Anlage abhängt.

## Patentansprüche

1. Verfahren zum Bereitstellen einer Kommunikation in einem, insbesondere gemäß dem PROFINET Standard betriebenen, Automatisierungsnetzwerk mit zumindest einer Speicher Programmierbaren Steuerung und zumindest einem ersten Feldgerät, **dadurch gekennzeichnet, dass** die Speicher Programmierbare Steuerung auf Grundlage zumindest einer Netzwerkeigenschaft, insbesondere einer ersten Zykluszeit der Speicher Programmierbaren Steuerung, eine zweiten Zykluszeit des Feldgerätes zumindest temporär bestimmt und dem Feldgerät als zweite Zykluszeit vorgibt.

2. Verfahren nach dem vorhergehenden Anspruch, **dadurch gekennzeichnet, dass** die Speicher Programmierbare Steuerung die Netzwerkeigenschaften, insbesondere den Verlauf der ersten Zykluszeit, während des Betriebes überwacht.

3. Verfahren nach einem der vorhergehenden Ansprüche, **dadurch gekennzeichnet, dass** die Speicher Programmierbare Steuerung die zweite Zykluszeit auf Grundlage einer Historie der Überwachung der ersten Zykluszeit bestimmt.

4. Verfahren nach dem vorhergehenden Anspruch, **dadurch gekennzeichnet, dass** die Speicher Programmierbare Steuerung statistische Größen, wie gleitender Mittelwert, Maxima und/oder Minima, auf Grundlage der Überwachung bildet.

5. Verfahren nach einem der vorhergehenden Ansprüche, **dadurch gekennzeichnet, dass** die Speicher Programmierbare Steuerung die zweite Zykluszeit auf Grundlage einer Prädiktion des zukünftigen Verlaufs der ersten Zykluszeit bestimmt.

6. Verfahren nach einem der vorhergehenden Ansprüche, **dadurch gekennzeichnet, dass** die Speicher Programmierbare Steuerung als eine, insbesondere weitere, Netzwerkeigenschaft, die Änderungsrate von Prozesswerten des ersten Feldgerätes überwacht und die Ergebnisse der Überwachung zur Vorgabe der zweiten Zykluszeit heranzieht.

7. Verfahren nach einem der vorhergehenden Ansprüche, **dadurch gekennzeichnet, dass** die Speicher Programmierbare Steuerung als eine, insbesondere weitere, Netzwerkeigenschaft, den Zustand des Netzwerks, insbesondere Diagnoseinformationen und/oder Anlagenzustände, wie Betrieb, Stillstand, Wartung, etc., überwacht und die Ergebnisse der Überwachung zur Vorgabe der zweiten Zykluszeit heranzieht.

8. Verfahren nach einem der vorhergehenden Ansprüche, **dadurch gekennzeichnet, dass** eine Optimierung der Bestimmung der zweiten Zykluszeit auf Grundlage von, insbesondere während des Betriebs, durchgeführtem maschinellen Lernen erfolgt.

9. Verfahren nach einem der vorhergehenden Ansprüche, **dadurch gekennzeichnet, dass** die Bestimmung und/oder die Vorgabe während des Betriebes, insbesondere nach regelmäßigen Zeitabständen und/oder ereignisgesteuert, wiederholt wird.

10. Speicher Programmierbare Steuerung **gekennzeichnet durch** Mittel zur Durchführung des Verfahren nach einem der vorhergehenden Ansprüche.

11. Feldgerät **gekennzeichnet durch** Mittel zur Durchführung des Verfahrens nach einem der Ansprüche 1 bis 9.
